# EUROPEAN PATENT APPLICATION

(11) **EP 4 708 473 A1**
(43) Date of publication of application: **11.03.2026**
(21) Application number: 25187218.0
(22) Date of filing: 03.07.2025
(51) Int. Cl.: H01M 50/107, H01M 50/152, H01M 50/184, H01M 50/186, H01M 50/559, H01M 50/566

(54) **SECONDARY BATTERY, BATTERY PACK AND ELECTRONIC APPARATUS**

(30) Priority: 09.09.2024 CN 202422205342 U
(71) Applicant: AESC Japan Ltd., Yokohama-Shi, Kanagawa 220-0012 (JP)
(72) Inventor: LI, Qiankun, Jiangyin City, Wuxi City, 214443 (CN)
(74) Representative: Becker, Eberhard

(57) **Abstract**

A secondary battery (1), battery pack (8), and an electronic apparatus (9) are provided. The secondary battery (1) includes an electrode assembly (20), a casing (101), an electrode post (40), a sealing rivet (411), and a welding mark (60). The electrode assembly (20) is accommodated in the casing (101), and one end of the casing (101) has an opening portion (107). An end portion (407) of the electrode post (40) away from the electrode assembly (20) protrudes from the casing (101) through the opening portion (107), and the end portion (407) of the electrode post (40) is provided with a groove (409). The sealing rivet (411) is matched and embedded in the groove (409). The sealing rivet (411) is welded and fixed to the electrode post (40) through the welding mark (60) located on a connection portion of the sealing rivet (411) and the end portion (407).

## Description

### BACKGROUND

### Technical Field

The disclosure relates to the field of batteries, and in particular relates to a secondary battery, a battery pack, and an electronic apparatus.

### Description of Related Art

In a power battery, the sealing rivet is an important component used for battery packaging. The sealing rivet is mainly used to ensure that the electrolyte inside the battery will not leak and prevent external air and moisture from entering the inside of the battery. The service life and safety performance of the battery are thus protected. Laser welding is a secure and commonly used assembly method for sealing rivets. For instance, in the related art, continuous laser welding may be adopted to implement butt welding of a sealing rivet with other components. However, the molten pool formed by the existing continuous laser welding has a narrow width and has high requirements on the fitting clearance of the welding seam.

### SUMMARY

Some embodiments of the disclosure provide a secondary battery, a battery pack, and an electronic apparatus capable of solving the problem of high requirements for a fitting clearance of a welding seam when welding a sealing rivet to other components.

The first aspect of the disclosure provides a secondary battery including an electrode assembly, a casing, an electrode post, a sealing rivet, and a welding mark. The electrode assembly is accommodated in the casing, and one end of the casing has an opening portion. An end portion of the electrode post away from the electrode assembly protrudes from the casing through the opening portion, and the end portion of the electrode post is provided with a groove. The sealing rivet is matched and embedded in the groove, and an end surface of an outer periphery of the sealing rivet is welded to an end surface of the end portion of the electrode post to form the welding mark. A welding trajectory of the welding mark is configured as: extending overall along a primary trajectory line and locally rotating or reciprocating along a secondary trajectory line to expand a width of the primary trajectory line.

Optionally, the primary trajectory line corresponds to a shape and a size of the outer periphery of the sealing rivet.

Optionally, the secondary trajectory line is a broken line, a wavy line, a spiral line, an arc, or an elliptical arc.

Optionally, the secondary trajectory line is an arc, and a radius R of the arc is 0.3 mm to 1.0 mm.

Optionally, a translation step length A of adjacent secondary trajectory lines is 0.2 mm to 1.0 mm.

Optionally, a cross section of the welding mark is a square or a trapezoid having a flat bottom surface.

Optionally, a cross-sectional area of the cross section of the welding mark is S, a width of the welding mark is W, a depth of the welding mark is D, and S/(W×D)>0.5.

Optionally, an outer surface of the welding mark is recessed inward.

Optionally, a filling hole and a sealing plug are further included. The filling hole penetrates through a bottom wall of the groove, and the sealing plug is inserted into and sealing the filling hole.

Optionally, a surface of the welding mark is coated with a sealing adhesive.

Optionally, a top portion of the sealing adhesive is lower than an end surface of the sealing rivet away from the electrode assembly.

Optionally, the sealing adhesive is an ultraviolet curing adhesive.

The second aspect of the disclosure further provide a battery pack including the secondary battery according to the first aspect of the disclosure.

The third aspect of the disclosure further provide an electronic apparatus including the battery pack according to the second aspect of the disclosure.

By utilizing the laser speckle to rotate or reciprocate along the secondary trajectory line, the overall width of the formed molten pool is expanded, i.e., the width of the welding mark is extended. Therefore, when welding the sealing pin and the positive electrode post, the problem of high requirements for the fitting clearance between the two is overcome.

### BRIEF DESCRIPTION OF THE DRAWINGS

FIG. 1 is a schematic view of an inner structure of a secondary battery according to a first embodiment of the disclosure.
FIG. 2 is a cross-sectional view of a positive terminal assembly of the secondary battery according to the first embodiment of the disclosure.
FIG. 3 is a schematic view of a welding trajectory of a positive electrode post and a sealing rivet of the secondary battery according to the first embodiment of the disclosure.
FIG. 4 is a locally enlarged view of the welding trajectory according to the first embodiment of the disclosure.
FIG. 5 is a cross-sectional metallographic photograph of a welding mark according to the first embodiment of the disclosure.
FIG. 6 is a cross-sectional view of the positive terminal assembly according to a second embodiment of the disclosure.
FIG. 7 is a schematic structural view of a battery pack according to some embodiments of the disclosure.
FIG. 8 is a schematic structural view of an electronic apparatus according to some embodiments of the disclosure.

### DESCRIPTION OF THE EMBODIMENTS

The technical solutions in the embodiments of the disclosure will be clearly and completely described below with reference to the accompanying drawings in the embodiments of the disclosure. Obviously, the described embodiments are only a part of the embodiments of the disclosure, but not all of the embodiments. Based on the embodiments of the disclosure, all other embodiments obtained by a person having ordinary skill in the art without any creative effort fall within the protection scope of the disclosure.

### <First Embodiment>

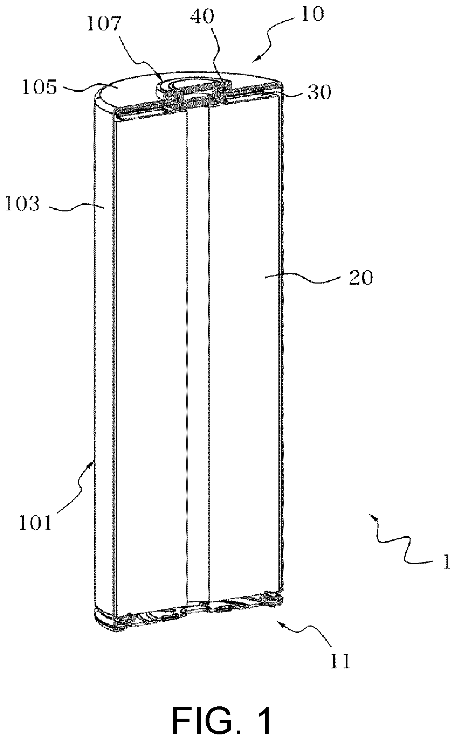

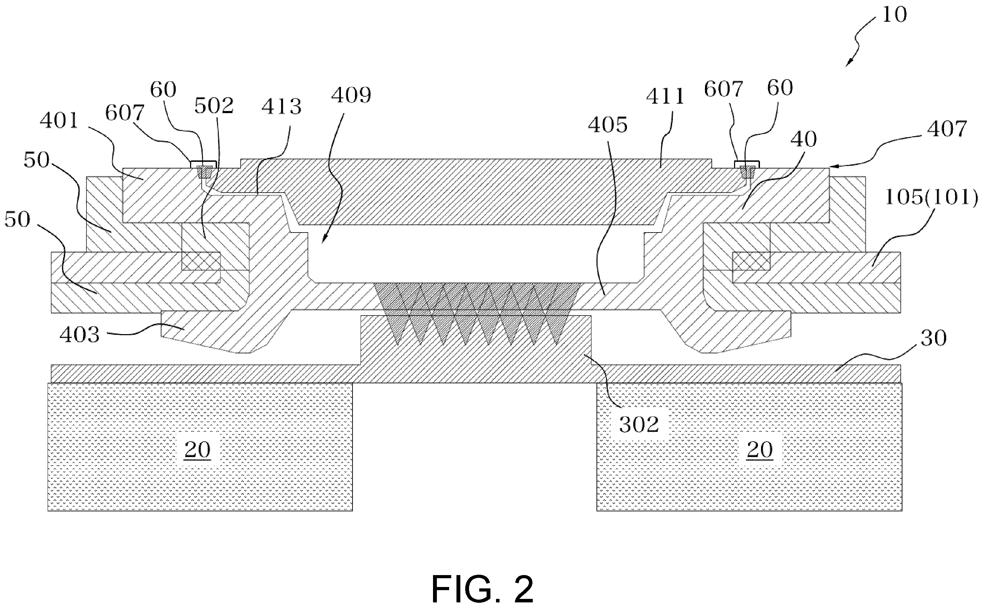

FIG. 1 is a schematic view of an inner structure of a secondary battery 1 according to a first embodiment of the disclosure. FIG. 2 is a cross-sectional view of a positive terminal assembly 10 of the secondary battery 1 according to the first embodiment of the disclosure. Referring to FIG. 1 and FIG. 2, in this embodiment, the secondary battery 1 is a cylindrical secondary battery 1, that is, a cell unit packaged using a cylindrical casing 101.

The casing 101 may be made of steel, stainless steel, or nickel-plated steel. A side wall portion 103 of the casing 101 has a hollow cylindrical shape, and a hollow portion is used to accommodate an electrode assembly 20. In FIG. 1, an upper end of the casing 101 is used to form the positive terminal assembly 10, and a lower end of the casing 101 is used to form a negative terminal assembly 11. The negative terminal assembly 11 electrically connects one electrode of the electrode assembly 20 with the casing 101, and the positive terminal assembly 10 electrically connects the other electrode of the electrode assembly 20 with a positive electrode post 40 and electrically isolates the positive electrode post 40 and the casing 101.

A structure of the upper end of the casing 101 in FIG. 1, that is, the end forming the positive terminal assembly 10, is shown in FIG. 2. At this end portion, the side wall portion 103 integrally bends inward and extends to form an end plate 105 with a substantially flat configuration. An opening portion 107 is kept in a center of the end plate 105, so that the positive terminal assembly 10 is formed at the opening portion 107.

A thickness of the side wall portion 103 of the casing 101 may be approximately 0.2 mm to 0.6 mm, and a thickness of the end plate 105 may be slightly greater than the thickness of the side wall portion 103. For instance, the end plate 105 may have a thickness of approximately 0.6 mm to 1.0 mm. By making the thickness of the side wall portion 103 relatively thin, a volume for accommodating the electrode assembly 20 may be increased, and energy density of the secondary battery 1 is thus improved. Meanwhile, the thickness of the side wall portion 103 should not be excessively thin, so as to increase strength of the casing 101 and ensure safety performance of the secondary battery 1. In some embodiments, a nickel-plated layer may be formed on a surface of the casing 101 to increase the strength of the casing 101.

The electrode assembly 20 of the secondary battery 1 is accommodated in a chamber formed by the cylindrical side wall portion 103 of the casing 101. The electrode assembly 20 includes a first electrode having a first polarity, a second electrode having a second polarity, and a separator disposed between the first electrode and the second electrode. The first polarity and the second polarity are opposite in polarity. The electrode assembly 20 has a wound cell structure, specifically formed by winding a laminate formed by sequentially stacking the sheet-like first electrode, the separator, and the second electrode in one direction. Wound cell structures known in the art may all be applied to the secondary battery 1 provided by the disclosure, and description thereof is not provided in detail herein.

As an example, a surface of the first electrode is coated with a positive active material, and a surface of the second electrode is coated with a negative active material. An end portion of the electrode assembly 20 in a length direction is not coated with an active material and is used to be welded to a current-collecting member 30, so as to be electrically connected to the positive electrode post 40 or a negative electrode post of the secondary battery 1 via the current-collecting member 30. The positive active material may be, for example, lithium metal phosphate, etc., the negative active material may be, for example, a carbon material, silicon, or a silicon compound, etc., and the separator may be, for example, a porous polymer film, such as polyethylene, polypropylene, ethylene/butene copolymer, etc.

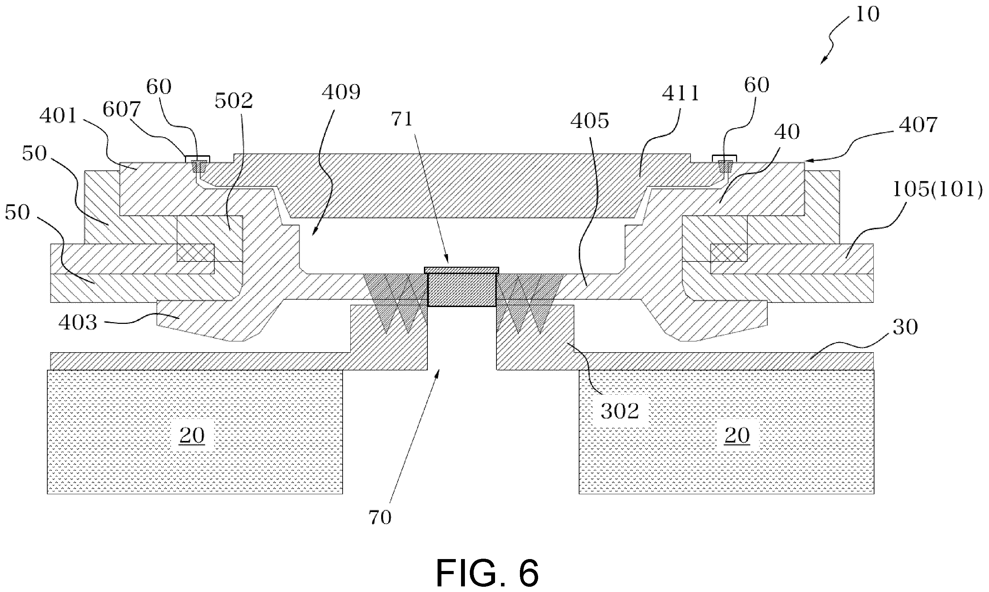

The electrode assembly 20 may be immersed in an electrolyte (e.g., an electrolytic solution), and the electrolytic solution may be injected into the hollow chamber of the casing 101 via a filling hole (for example, reference may be made to a second embodiment and FIG. 6). An arrangement position of the filling hole is not limited in this embodiment. The electrolyte may be a salt containing lithium ions, and the electrolyte may be dissolved in an organic solvent for use.

As the organic solvent, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof may be selected.

Referring to FIG. 2, in the positive terminal assembly 10 of the secondary battery 1 provided by this embodiment, the positive electrode post 40 has an overall cylindrical shape, with an upper end (an end portion 407) having an upper flip portion 401 formed by flipping outward and a lower end having a lower flip portion 403 formed by flipping outward. A flat bottom wall 405 is provided at a center of the lower end. Shapes and sizes of the upper flip portion 401 and the lower flip portion 403 are matched with a shape and a size of an insulating portion 50, so as to fix a position of the positive electrode post 40 using the insulating portion 50. The insulating portion 50 is disposed between the positive electrode post 40 and the casing 101 and electrically isolates the positive electrode post 40 and the casing 101. The insulating portion 50 includes a sealing ring 502, and both sides of the sealing ring 502 are clamped between the upper flip portion 401 and the end plate 105 to ensure a sealing effect herein. A material of the sealing ring 502 may be ethylene propylene diene monomer rubber, fluorosilicone rubber, or fluororubber, etc., but the disclosure is not limited thereto.

A middle portion of the upper end (i.e., the end portion 407) of the positive electrode post 40 is provided with a groove 409, and the groove 409 is the hollow portion of the end portion 407 of the cylindrical positive electrode post 40. A sealing rivet 411 is matched and embedded in the groove 409. A top surface of an outer periphery of the sealing rivet 411 is flush with a top surface of the upper flip portion 401 of the positive electrode post 40 and mutually adjacent thereto. At a junction where the top surface of the outer periphery of the sealing rivet 411 abuts against the top surface of the upper flip portion 401, a butt welding approach is adopted to weld and fix the sealing rivet 411 and the upper flip portion 401 of the positive electrode post 40. This embodiment is described by taking the example where the top surface of the outer periphery of the sealing rivet 411 is flush with the top surface of the upper flip portion 401. In other embodiments, the two may also not be flush with each other, as long as the outer periphery of the sealing rivet 411 and an inner edge of a top portion of the upper flip portion 401 are mutually adjacent and the matching relationship is satisfied, butt welding may thus be achieved at this location. The disclosure does not exclude such a solution.

Specifically, the butt welding process between the sealing rivet 411 and the upper flip portion 401 is completed using a continuous laser welding process. Specifically, after the positioning and clamping of the secondary battery 1 is completed, a laser device is started, and a laser speckle is irradiated at the position where the sealing rivet 411 and the upper flip portion 401 are connected. For instance, it may be irradiated on the outer periphery of the sealing rivet 411 and/or the inner edge of the upper flip portion 401 (that is, near the position shown by a welding mark 60 in the figure).

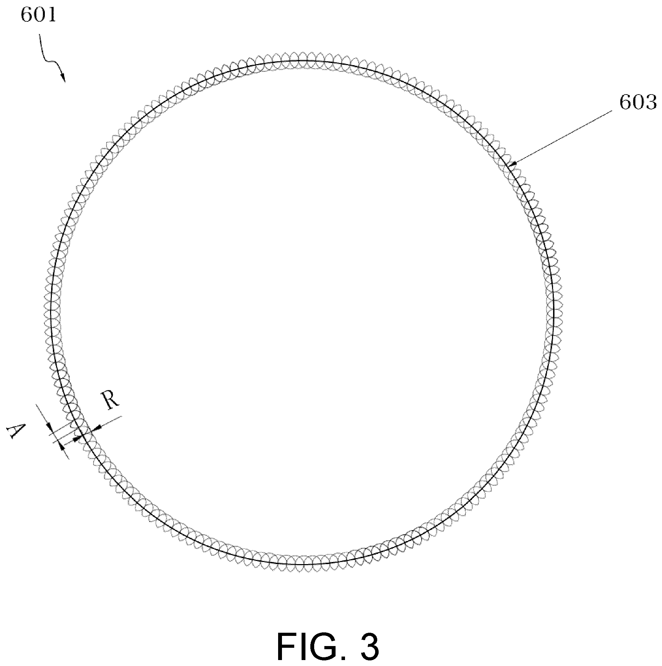

After continuous irradiation melts the metal to form a molten pool, the laser speckle is moved along a welding trajectory 601. The welding trajectory 601 for continuous laser welding is shown in FIG. 3. By moving the laser speckle along the welding trajectory 601 in FIG. 3, the metal may be melted to form a molten pool, and the welding mark 60 is formed after the molten pool solidifies. Referring to FIG. 3, the overall movement trajectory of the laser speckle is a primary trajectory line 603 of the welding trajectory 601. Specifically, in this embodiment, since a shape of the outer periphery of the sealing rivet 411 is circular, the primary trajectory line 603 corresponds to the shape and a size of the outer periphery of the sealing rivet 411 and is also circular. A diameter of the circular primary trajectory line 603 is substantially equal to an outer diameter of the sealing rivet 411, and a position is also substantially located at a position where the sealing rivet 411 and the upper flip portion 401 are connected. In other embodiments, the primary trajectory line 603 may also be adjusted accordingly according to the shape and size of the outer periphery of the sealing rivet 411, and is not limited to the circular shape in this embodiment.

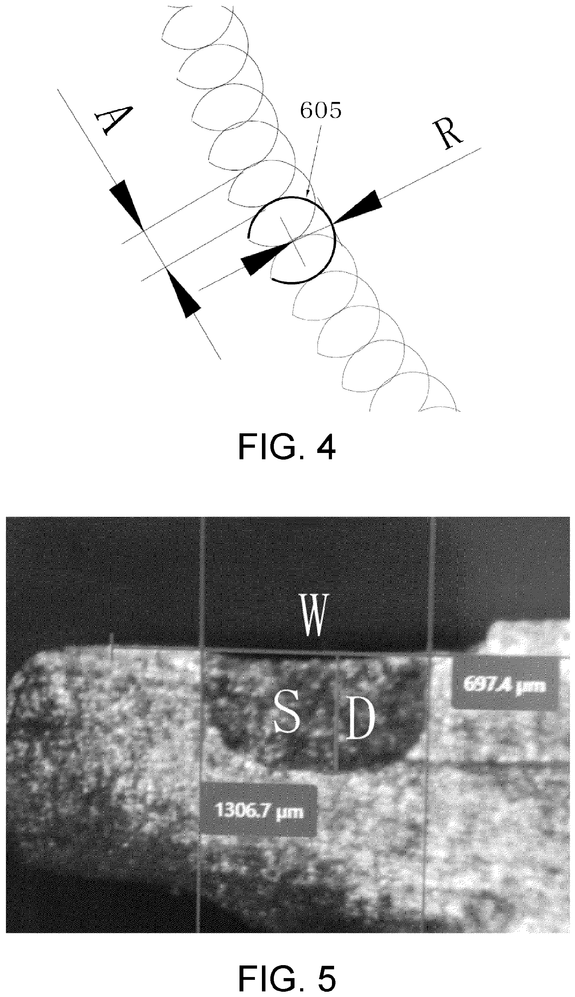

In addition to the overall primary trajectory line 603, by magnifying a local portion of the welding trajectory 601, a local secondary trajectory line 605 may be presented. FIG. 4 is a locally enlarged view of the welding trajectory 601 according to this embodiment. Referring to FIG. 4, in this embodiment, the secondary trajectory line 605 has an arc shape with a circumferential angle greater than π and less than 2π. Specifically, a plurality of secondary trajectory lines 605 are connected end to end with each other to form the circular welding trajectory 601 that extends overall along the primary trajectory line 603.

In this embodiment, compared to the related art where the laser speckle moves directly along the primary trajectory line 603, by making the laser speckle rotate along the secondary trajectory line 605 while moving along the primary trajectory line 603, the rotation of the laser speckle along the secondary trajectory line 605 may expand a width of the molten pool formed by the laser speckle, making the width of the molten pool wider than the width of the molten pool formed by single-point laser unidirectional movement along a circumference.

In this embodiment, an arc radius R of the secondary trajectory line 605 is 0.3 mm to 1.0 mm. An excessively large arc radius may result in failure to form a molten pool with a relatively flat bottom, while an excessively small radius may not effectively increase the width of the molten pool. By setting the arc radius between 0.3 mm and 1.0 mm, a square or trapezoidal molten pool with a wider width and flat bottom may be effectively formed, and the disadvantage that butt welding has high requirements for a fitting clearance of a welding seam is overcome. Matched with the arc radius R, a translation step length A of adjacent secondary trajectory lines 605 is 0.2 mm to 1.0 mm. Setting an appropriate translation step length A helps to control a depth of the molten pool. An excessively close translation step length A may easily cause the laser speckle to repeatedly irradiate the same or similar positions, making the molten pool depth excessively deep or even causing blow holes. While an excessively distant translation step length A may result in insufficient depth of the molten or failure to form a continuous molten pool with a flat bottom.

Viewing from the top-down direction in FIG. 2, a shape of the welding mark 60 formed by welding the sealing rivet 411 and the positive electrode post 40 is substantially circular corresponding to the primary trajectory line 603, while from the cross-sectional direction adopted in FIG. 2 itself, a cross section of the welding mark 60 is square or trapezoidal with a flat bottom surface.

FIG. 5 is a cross-sectional metallographic photograph of the welding mark 60. Referring to FIG. 5, the cross section of the welding mark 60 in this embodiment is a trapezoid having a flat bottom surface. Specifically, the cross section of the welding mark 60 has a wider top surface and a narrower bottom surface, with certain arc transition segments between the two side edges and the bottom surface. This cross-sectional shape is formed due to the rotation of the laser speckle along the secondary trajectory line 605. Specifically, because the laser speckle itself may form a molten pool with a narrower lower end and a wider upper end, as the laser speckle rotates and moves along the secondary trajectory line 605, the laser speckle forms a truncated cone-shaped molten pool with a flat bottom and a wider top. Further, because the laser speckle not only rotates along the secondary trajectory line 605 but also moves circumferentially along the primary trajectory line 603, by reasonably setting the sizes and shapes of the secondary trajectory line 605 and the primary trajectory line 603, the welding mark 60 with a trapezoidal shape having rounded corner transitions at the bottom may be formed in cross section (i.e., a normal plane perpendicular to the laser speckle movement direction) as shown in FIG. 5.

The heat generated during welding may cause expansion of the molten pool, which may further result in the welding mark protruding from a welding surface. In some embodiments, an appearance of the formed welding mark may be adjusted by controlling the clearance between the outer periphery of the sealing rivet 411 and the inner edge of the top portion of the upper flip portion 401. A more preferred control method is to control the sealing rivet 411 and the upper flip portion 401 to have a specified fitting clearance. When laser irradiation forms a molten pool, the molten pool fills the fitting clearance, so that even if swelling occurs, the top portion of the overall molten pool is still lower relative to the top surface of the outer periphery of the sealing rivet 411 (or relative to the top surface of the upper flip portion 401). In addition, the setting of the fitting clearance should also ensure welding strength. As shown in FIG. 5, an outer surface of the welding mark 60 (i.e., a top surface of the welding mark 60 in FIG. 5) is recessed inward (i.e., downward in FIG. 5).

Referring to FIG. 5 again, a cross-sectional area S of the cross section of the welding mark is S, a width of the welding mark is W, a depth of the welding mark is D, and S, W, and D satisfy S/(W×D) > 0.5. Due to the characteristics of laser penetration welding, lower end widths of the formed molten pool and the corresponding weld 60 are usually less than upper end widths. By making the laser speckle rotate or reciprocate along the secondary trajectory line 605, not only may a melting amount of metal be increased and a filling degree of the fitting clearance be improved, but also the uniformity of the upper and lower widths of the molten pool may be increased, so that welding strength and reliability are improved.

In this embodiment, the secondary trajectory line 605 is described as an arc by way of example, but this does not constitute a limitation on its shape. In other embodiments, the secondary trajectory line 605 may also be in the form of a broken line, a wavy line, a spiral line, an elliptical arc, etc. Correspondingly, the movement method of the laser speckle along the secondary trajectory line 605 may also be reciprocating movement along a broken line, a wavy line, etc., or rotational movement along a spiral line, an elliptical arc, etc.

Continuous laser welding for butt welding generally adopts infrared laser. Smooth metal surfaces, such as the surface of the positive electrode post 40 made of aluminum material, may easily generate high reflectivity to laser during welding, thereby resulting in problems of decreased photothermal conversion efficiency and large differences in welding quality. In this embodiment, roughness of the top surface of the upper flip portion 401 of the positive electrode post 40 and/or roughness of the top surface of the outer periphery of the sealing rivet 411 may be controlled by grinding the surface of the positive electrode post 40 or the sealing rivet 411 or by material selection. Specifically, in this embodiment, roughness R₁ of the top surface of the outer periphery of the sealing rivet 411 and roughness R₂ of the top surface of the upper flip portion 401 are both controlled to be above 0.5 mm. By controlling the roughness at the above positions, laser absorption may be increased, heating rate may be improved, and consistency of welding quality may be enhanced.

In the secondary battery 1 provided in this embodiment, by defining the welding method between the end surface of the outer periphery of the sealing rivet 411 and the inner edge of the end portion 407 of the positive electrode post 40 and utilizing the rotation or reciprocation of the laser speckle along the secondary trajectory line 605 to expand the overall width of the formed molten pool, when welding the sealing rivet 411 and the positive electrode post 40, the problem in the related art that high requirements for the fitting clearance between the sealing rivet 411 and the positive electrode post 40 are needed is overcome.

### <Second Embodiment>

The second embodiment of the disclosure provides a secondary battery 1. FIG. 6 is a cross-sectional view of the positive terminal assembly 10 according to the second embodiment. The main structural difference between the secondary battery 1 of the second embodiment and the secondary battery 1 of the first embodiment lies in that, in the second embodiment, the secondary battery 1 further includes a filling hole 70 and a sealing plug 71.

Referring to FIG. 6, the current-collecting member 30 is made of a conductive metal material, such as aluminum, copper, or other materials. The end portion of the electrode assembly 20 in the length direction is bent and then extends in a direction parallel to the current-collecting member 30. The bent portion is combined with the current-collecting member 30 to complete the electrical connection between the current-collecting member 30 and the electrode assembly 20. One surface of the current-collecting member 30 away from the electrode assembly 20 is combined with the positive electrode post 40 or the negative electrode post to collect and conduct current through the current-collecting member 30.

The positive electrode post 40 is welded and fixed to the current-collecting member 30 by the bottom wall 405. The groove 409 may expose the bottom wall 405. When the sealing rivet 411 is not filled in the groove 409, laser penetration welding may be utilized to complete the welding and fixing between the bottom wall 405 and the current-collecting member 30.

In this embodiment, the filling hole 70 is arranged at the center of the bottom wall 405 of the positive electrode post 40 and at a protruding portion 302 at the center of the current-collecting member 30. Specifically, the filling hole 70 penetrates through the bottom wall 405 and the protruding portion 302. Further, sizes and positions of the filling hole 70 on the bottom wall 405 and the filling hole 70 on the protruding portion 302 correspond to each other. A producer may inject electrolytic solution into the casing 101 of the secondary battery 1, particularly into the chamber accommodating the electrode assembly 20, via the filling hole 70.

After the liquid injection is completed, the sealing plug 71 may be further inserted into the filling hole 70 to seal the filling hole 70, so that the sealing performance of the secondary battery 1 is improved. The sealing plug 71 may be a rubber plug. After using the sealing plug 71 to seal the filling hole 70, the sealing rivet 411 is then filled into the groove 409, and the welding between the sealing rivet 411 and the positive electrode post 40 is completed.

In this embodiment, a step portion 413 is arranged at a top portion of the groove 409, specifically arranged at the inner edge of the upper flip portion 401. A surface of the step portion 413 abuts against the sealing rivet 411 for supporting the sealing rivet 411 and preliminarily defining the position of the sealing rivet 411 during the welding process.

In some embodiments of the disclosure, a surface of the welding mark 60 may be coated with a sealing adhesive 607 to further improve the sealing effect of the sealing rivet 411. The sealing adhesive 607 should not be excessively thick, for example, with a thickness less than 0.5 mm. Specifically, a top portion of the sealing adhesive 607 is preferably lower than the end surface of the sealing rivet 411 away from the electrode assembly 2. That is, the top portion of the sealing adhesive 607 is lower than the upper end surface of the sealing rivet 411, so that the adhesive is prevented from subsequently interfering with the welding between a bus bar and the upper end surface of the sealing rivet 411. The sealing adhesive 607 is preferably a UV-curable adhesive. By using a UV-curable adhesive as the sealing adhesive 607, heat generated during laser cleaning may not be absorbed, and advantages of fast curing speed, no volatilization, high transparency, and low VOC emission are provided.

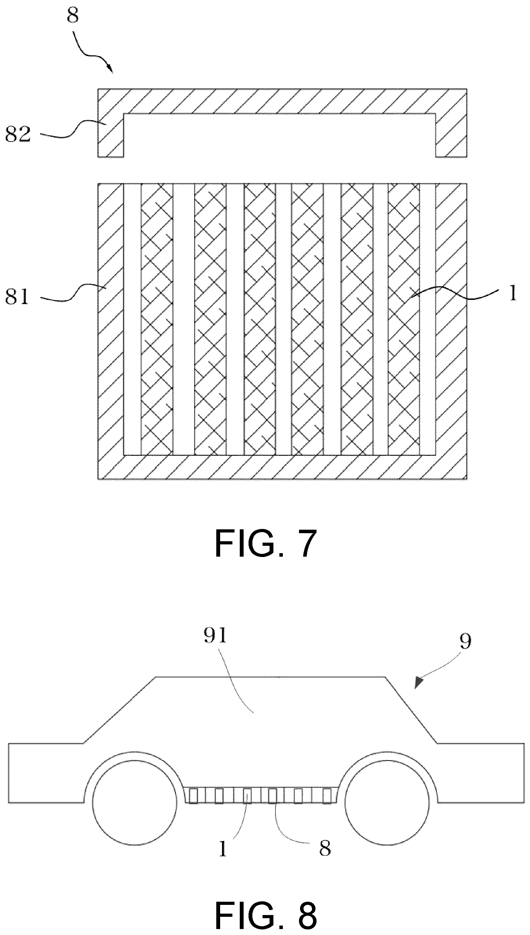

Referring to FIG. 7, the disclosure further provides a battery pack 8 including the secondary battery 1 provided in any of the above embodiments. In the battery pack 8 provided by an embodiment of the disclosure, the battery pack 8 includes a box 81, a box cover 82, and a plurality of secondary batteries 1. The plurality of secondary batteries 1 are placed in the box 81 and are connected in series or in parallel with each other or in a combination of series and parallel connections. The box cover 82 covers the box 81 to protect the secondary batteries 1. It should be noted that in addition to the secondary batteries 1 provided by the embodiments of the disclosure, the battery pack 8 may also include a thermal management system of the battery pack, a circuit board, and other parts. The battery pack 8 may be a battery module, a battery pack, an energy storage cabinet, etc., and description thereof is not provided herein.

Referring to FIG. 8, the disclosure further provides an electronic apparatus 9 including the above-mentioned battery pack 8. A working portion 91 is electrically connected to the battery pack 8 to obtain power support. As an embodiment, the electronic apparatus 9 is a vehicle. The vehicle may be a fuel vehicle, a gas vehicle, or a new energy vehicle, and the new energy vehicle may be a pure electric vehicle, a hybrid vehicle, or a range-extended vehicle, etc., which is not limited herein. The working portion 91 is a vehicle body, and the battery pack 8 is arranged at the bottom of the vehicle body and provides electrical energy support for the driving of the vehicle or the operation of electrical components in the vehicle. However, in other embodiments, the electronic apparatus 9 may be a mobile phone, a portable apparatus, a notebook computer, a ship, a spacecraft, an electric toy, an electric tool, etc. The spacecraft includes but not limited to an airplane, a rocket, a space shuttle, a spaceship, etc. The working portion 91 may be a unit component capable of obtaining the electric energy of the battery pack 8 and performing corresponding work, such as a blade rotating unit of a fan, a dust collection working unit of a vacuum cleaner, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic apparatus is not particularly limited in the embodiments of the disclosure.

## Claims

1. A secondary battery (1), comprising:
an electrode assembly (20);
a casing (101), wherein the electrode assembly (20) is accommodated in the casing (101), and one end of the casing (101) has an opening portion (107);
an electrode post (40), wherein an end portion (407) of the electrode post (40) away from the electrode assembly (20) protrudes from the casing (101) through the opening portion (107), and the end portion (407) of the electrode post (40) is provided with a groove (409); and
a sealing rivet (411) matched and embedded in the groove (409), wherein the secondary battery (1) is **characterized in that** an end surface of an outer periphery of the sealing rivet (411) is welded to an end surface of the end portion (407) of the electrode post (40) to form a welding mark, and a welding trajectory of the welding mark (60) is configured as: extending overall along a primary trajectory line (603) and locally rotating or reciprocating along a secondary trajectory line (605) to expand a width of the primary trajectory line (603).

2. The secondary battery (1) according to claim 1, wherein the primary trajectory line (603) corresponds to a shape and a size of an outer periphery of the sealing rivet (411).

3. The secondary battery (1) according to claim 1, wherein the secondary trajectory line (605) is a broken line, a wavy line, a spiral line, an arc, or an elliptical arc.

4. The secondary battery (1) according to claim 3, wherein the secondary trajectory line (605) is an arc, and a radius R of the arc is 0.3 mm to 1.0 mm.

5. The secondary battery (1) according to claim 3, wherein a translation step length A of adjacent secondary trajectory lines (605) is 0.2 mm to 1.0 mm.

6. The secondary battery (1) according to claim 1, wherein a cross section of the welding mark (60) is a square or a trapezoid having a flat bottom surface.

7. The secondary battery (1) according to claim 1, wherein a cross-sectional area of a cross section of the welding mark (60) is S, a width of the welding mark (60) is W, a depth of the welding mark (60) is D, and S/(W×D)>0.5.

8. The secondary battery (1) according to claim 1, wherein an outer surface of the welding mark (60) is recessed inward.

9. The secondary battery (1) according to claim 1, further comprising:
a filling hole (70), penetrating through a bottom wall (405) of the groove (409); and
a sealing plug (71) inserted into and sealing the filling hole (70).

10. The secondary battery (1) according to claim 9, wherein a surface of the welding mark (60) is coated with a sealing adhesive (607).

11. The secondary battery (1) according to claim 10, wherein a top portion of the sealing adhesive (607) is lower than an end surface of the sealing rivet (411) away from the electrode assembly (20).

12. The secondary battery (1) according to claim 10, wherein the sealing adhesive (607) is an ultraviolet curing adhesive.

13. A battery pack (9), comprising a plurality of secondary batteries (1), wherein each of the secondary batteries (1) is the secondary battery (1) according to any one of claims 1-12.

14. An electronic apparatus (9) comprising the battery pack (8) according to claim 13.
